# FASCICULE DE BREVET EUROPEEN

(11) **EP 3 545 609 B1**
(45) Date de publication et mention de la délivrance du brevet: **24.05.2023**
(21) Numéro de dépôt: 17823033.0
(22) Date de dépôt: 23.11.2017
(51) Int. Cl.: H02K 11/22, G01D 11/30, H02K 5/10, H02K 11/21, H02K 7/00

(54) **ENSEMBLE DE FIXATION D'UN CODEUR SUR UNE MACHINE TOURNANTE**
ANORDNUNG ZUR BEFESTIGUNG EINES CODIERERS AN EINER ROTIERENDEN MASCHINE
ASSEMBLY FOR FIXING AN ENCODER TO A ROTATING MACHINE

(30) Priorité: 25.11.2016 FR 1661497
(43) Date de publication de la demande: 02.10.2019
(73) Titulaire: Moteurs Leroy-Somer, 16915 Angouleme Cedex 9 (FR)
(72) Inventeur: CICILIANI, Philippe, 25700 Valentigney (FR); PERA, Thierry, 90000 Belfort (FR); DOUVRY, Mickael, 90500 Beaucourt (FR); CORBERAND, Bernard, 25310 Herimoncourt (FR)
(74) Mandataire: Cabinet Nony
(86) Numéro de dépôt international: PCT/EP2017/080280
(87) Numéro de publication internationale: WO 2018/096071

(56) Documents cités:
- EP-A2- 1 107 431
- CN-U- 203 056 713
- DE-A1-102013 002 049
- US-A1- 2005 082 926
- US-A1- 2010 213 798

## Description

La présente invention concerne la fixation de codeurs sur des machines électriques tournantes.

Les machines électriques tournantes, moteurs ou génératrices, peuvent être équipées de codeurs permettant la détection de la vitesse et/ou de la position du rotor.

Les solutions utilisées jusqu'à présent pour la fixation des codeurs nécessitent des versions de support de paliers arrière différentes entre les machines avec et sans codeurs. Cela augmente, pour le fabricant de ces machines, le nombre de pièces à gérer et accroît la difficulté à rajouter un codeur lors d'une demande en après-vente.

La publication CN 203056713 divulgue un élément servant à la fixation d'un codeur. Cet élément peut être connecté à l'arbre du rotor lorsqu'un codeur doit être installé, et enlevé lorsque la machine n'a pas plus besoin de codeur, cet élément étant choisi en fonction des caractéristiques du codeur à fixer.

CN 202957711 divulgue un système pour le montage d'un codeur comportant un élément qui est fixé sur le flasque arrière de la machine, cet élément étant choisi en fonction du codeur à fixer.

CN 205141930 divulgue un autre système de montage d'un codeur, comportant une pièce adaptatrice choisie en fonction de l'arbre sur lequel elle doit être fixée. Le codeur est fixé à cette pièce, qui traverse le flasque arrière de la machine.

DE 10 2013 002049 divulgue une machine comportant un arbre de couplage reliant un arbre d'un codeur à un arbre de la machine.

EP 1 107 431 divulgue une machine électrique comportant un bâti ayant une boîte de palier et un couvercle de palier adapté à la périphérie intérieure de la boîte de palier.

US 2010/213798 divulgue un ensemble comportant un codeur fixé à l'arbre d'un moteur via un arbre du codeur. L'ensemble comportant une plaque d'isolation thermique pour éviter le transfert thermique depuis le moteur vers le codeur.

US 2005/082926 divulgue une machine électrique qui peut être optionnellement équipée d'un codeur.

L'invention vise à améliorer encore les solutions existantes pour la fixation de codeurs sur des machines électriques tournantes et elle y parvient grâce à une gamme de deux machines telle que définie par la revendication 1.

L'invention permet d'équiper d'un codeur une machine sans changer le support de palier de la machine. Ainsi, un même support de palier peut être utilisé pour une machine avec ou sans codeur. L'invention permet ainsi une personnalisation au plus tard des machines, et facilite la mise en place d'un codeur en après-vente.

L'invention s'applique à des moteurs comme à des génératrices, à des machines asynchrones comme à des machines à aimants.

La pièce d'étanchéité est configurée pour être montée de manière amovible sur le support de palier de la machine.

La pièce d'étanchéité peut comporter une ouverture centrale pour le passage de l'embout.

L'ensemble de fixation comporte un capot dans lequel la partie tournante du codeur est logée. Le capot supporte une partie fixe du codeur, la partie fixe correspondant à sa connectique. Le capot peut comporter une bride de fixation sur le support de palier de la machine, cette bride de fixation étant par exemple formée intégralement avec le corps du capot.

L'ensemble de fixation peut comporter un disque de montage ajouré reliant le capot à la pièce d'étanchéité.

La pièce d'étanchéité est par exemple montée sur le support de palier à l'aide de vis.

La pièce d'étanchéité comporte, dans un premier mode de réalisation de l'invention, une lèvre annulaire d'étanchéité, présentant des nervures d'étanchéité sur sa face tournée vers l'arbre.

Dans un second mode de réalisation alternatif au premier mode, l'ensemble de fixation comporte une pièce d'extrémité coaxiale à la pièce d'étanchéité, la lèvre annulaire présentant sur sa surface en regard de la pièce d'extrémité des nervures d'étanchéité.

Le codeur peut être de tout type, notamment optique ou magnétique.

La machine peut comporter un épaulement périphérique sur le bout d'arbre. La pièce d'extrémité peut comporter une nervure périphérique qui prend appui sur cet épaulement périphérique pour assurer la coaxialité du codeur lors de sa fixation.

L'invention a encore pour objet un procédé pour équiper d'un codeur une machine, le procédé étant défini par la revendication 6 et comportant l'étape consistant à fixer la pièce d'étanchéité sur le support de palier arrière de la machine puis à mettre en place le codeur, grâce à un ensemble de fixation selon l'invention.

Ce procédé comporte l'étape consistant à enlever le bouchon fermant le support de palier avant la fixation de la pièce d'étanchéité.

L'invention pourra être mieux comprise à la lecture de la description détaillée qui va suivre, d'exemples non limitatifs de mise en oeuvre de celle-ci, et à l'examen du dessin annexé, sur lequel :
- les figures 1 et 2 représentent une gamme de deux machines selon l'invention, respectivement avec et sans codeur, et
- les figures 3 et 4 sont des vues analogues aux figures 1 et 2, d'une variante de gamme de machines selon l'invention.

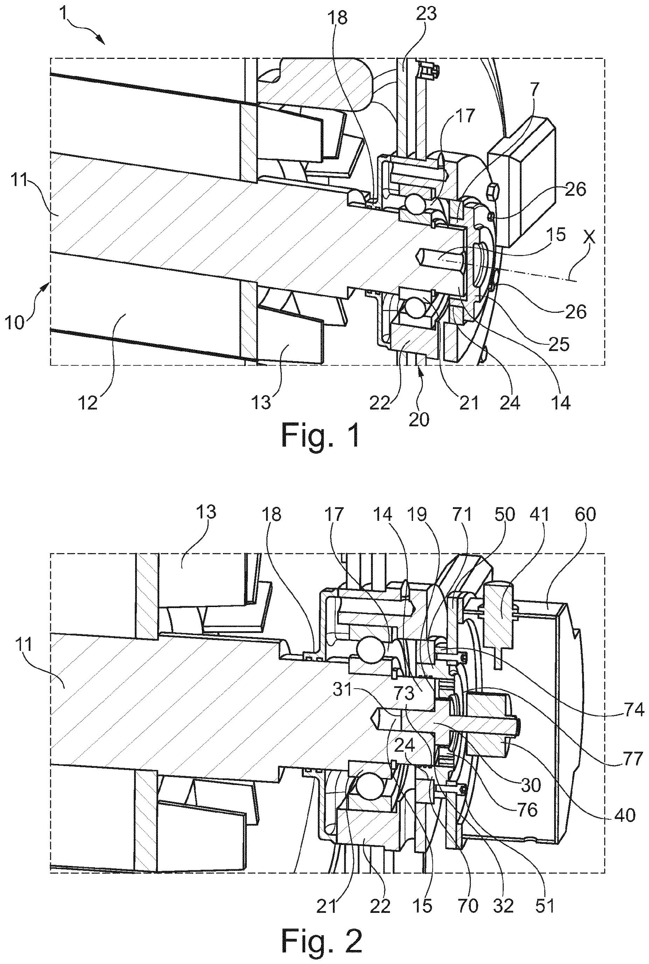

On a représenté à la figure 1 une machine électrique 1 selon l'invention, comportant un rotor 10 tournant à l'intérieur d'un stator 20 qui n'a été représenté que partiellement.

Le rotor 10 comporte un arbre 11 qui tourne autour d'un axe de rotation X et une structure magnétique 12, par exemple bobinée et/ou à aimants permanents.

Le rotor peut éventuellement comporter en outre, comme illustré, au moins un ventilateur 13.

Le stator 20 comporte un bobinage qui peut être de tout type, par exemple distribué ou concentré.

L'arbre 11 est supporté à ses extrémités par des roulements 21, par exemple des roulements à billes comme illustré, ces roulements étant montés dans des supports de paliers 22 eux-mêmes fixés sur les flasques 23 de la machine.

Dans l'exemple illustré, le flasque 23 et le support de palier arrière 22 sont des pièces séparées qui sont assemblées. On ne sort pas du cadre de la présente invention lorsque le flasque et le support de palier sont réalisés d'une seule pièce par fonderie par exemple.

L'arbre 11 présente à l'arrière un bout d'arbre 14 qui est pourvu d'un trou borgne taraudé 15, d'axe X.

Le support de palier 22 présente une ouverture 24 dans laquelle le bout d'arbre 14 est engagé.

La machine représentée à la figure 1 est dépourvue de codeur et l'ouverture 24 est obturée par un bouchon 25 qui est par exemple fixé sur le support 22 par des vis 26. Le bouchon 25 comporte, comme illustré, une lèvre annulaire 27 qui s'applique étroitement sur le bord de l'ouverture 24 pour assurer une fixation étanche du bouchon 25 sur le support 22. Ainsi, le lubrifiant du roulement reste confiné dans un espace 17 s'étendant entre un joint 18 monté sur le support 22 du côté intérieur et le bouchon 25.

Pour munir la machine 1 de la figure 1 d'un codeur, on dispose, conformément à l'invention, d'un ensemble de pièces qui peuvent se fixer sur le support 22 sans nécessiter le changement de celui-ci ni la modification du flasque 23. Plus particulièrement, dans l'exemple considéré, cet ensemble de pièces comporte un embout 30 qui porte la partie rotative du codeur 40, cet embout 30 ayant une extrémité 31 qui est fixée, notamment vissée, dans le trou 15 du bout d'arbre 14 comme illustré. L'embout 30 peut comporter une collerette 32 qui vient axialement en butée contre la face d'extrémité 19 du bout d'arbre 14, ce qui immobilise axialement l'embout 30 relativement à l'arbre 11 lors de sa fixation.

Un disque de montage ajouré 50 est fixé par des vis 51 sur le support de palier 22 et sert d'élément de liaison entre le support 22 et un capot 60.

Ce dernier porte une partie fixe 41 du codeur, représentée schématiquement à la figure 2, notamment sa connectique.

Une pièce d'étanchéité 70 est interposée entre le disque de montage 50 et le support 22. Cette pièce d'étanchéité 70 comporte une lèvre annulaire 71 qui s'ajuste étroitement dans l'ouverture 24 et présente sur sa face tournée vers l'arbre une série de nervures d'étanchéité 73. Ainsi, le lubrifiant 17 contenu entre le joint 18 et la pièce d'étanchéité 70 est empêché de s'échapper par l'ouverture 24.

La pièce d'étanchéité 70 peut également comporter, comme illustré, une bride 74 qui s'interpose axialement entre le support 22 et le disque de montage 50 et qui est traversée par les vis de fixation 51.

La pièce d'étanchéité 70 comporte dans l'exemple illustré une paroi transversale 76 qui fait saillie radialement vers l'intérieur jusqu'à une faible distance de la collerette 32 de l'embout 30, et qui peut permettre la fixation d'un étrier 77 supportant la partie fixe du codeur coaxiale à la partie tournante du codeur.

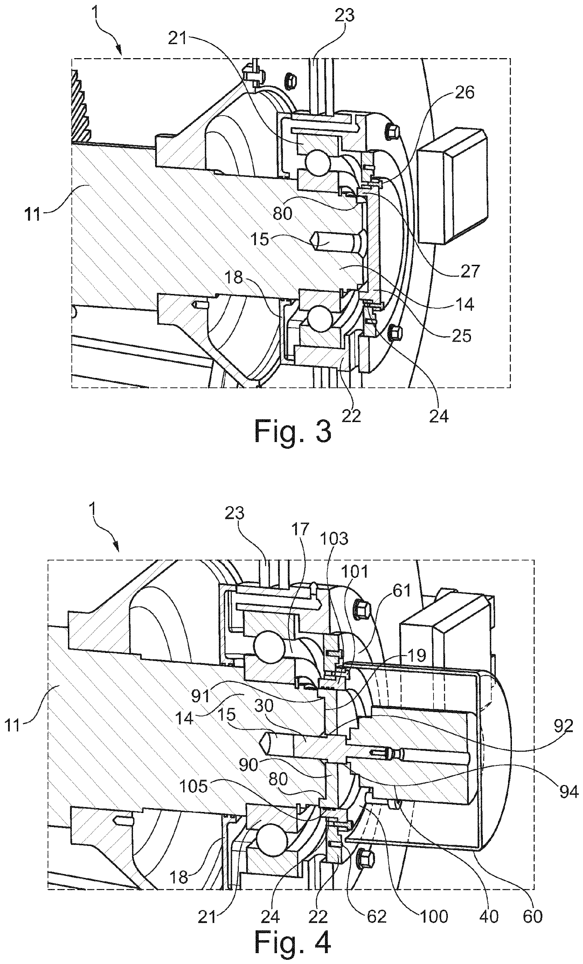

Dans la variante des figures 3 et 4, la forme du bout d'arbre 14 est un peu différente et comporte un épaulement périphérique 80 coaxial au trou borgne 15. Sur la figure 3, la machine 1 est représentée avec le bouchon 25 en place, lequel est fixé comme dans l'exemple de la figure 1 à l'aide de vis 26.

Comme dans l'exemple de réalisation de la figure 2, le montage de la partie tournante du codeur 40 s'effectue à l'aide d'un embout 30 qui est engagé dans le trou 15.

Toutefois, une pièce d'extrémité 90 est fixée sur le bout d'arbre 14 pour assurer la coaxialité du codeur et de l'arbre 11. Cette pièce d'extrémité 90 comporte une nervure périphérique 91 qui prend appui sur l'épaulement périphérique 80 de l'arbre. Cela permet une meilleure maîtrise de la coaxialité de la partie tournante du codeur 40.

La pièce d'extrémité 90 présente une ouverture centrale 92 qui est traversée par l'embout 30. Ce dernier présente une collerette 94 qui vient axialement en appui contre la face arrière de la pièce d'extrémité 90. Sur cette figure, la connectique du codeur n'a pas été représentée, dans un souci de clarté du dessin.

L'étanchéité de l'espace 17 dans lequel évoluent les roulements est assurée par une pièce d'étanchéité 100 qui est fixée par des vis 101 sur la pièce de support 22. Cette pièce d'étanchéité 100 comporte une lèvre annulaire 103, qui s'interpose radialement avec un faible jeu entre le bord de l'ouverture 24 et la périphérie de la pièce d'extrémité 90. La lèvre annulaire 103 présente, sur sa surface en regard de la pièce d'étanchéité 90, des nervures d'étanchéité 105.

Les pièces d'extrémité 90, d'étanchéité 100 et le capot 60 constituent un ensemble de pièces qui peut être monté sur la machine après enlèvement du bouchon 25 pour l'équiper du codeur 40, sans modification du support de palier arrière 22 ni du flasque arrière 23.

Le mode de réalisation de la figure 4 présente l'avantage, sur celui de la figure 2, de remédier à un éventuel défaut de coaxialité entre l'axe X du moteur et celui du codeur, cette coaxialité n'étant assurée dans l'exemple de la figure 2 que par la coaxialité du trou 15 du bout d'arbre 14 avec l'embout 30 portant la partie tournante du codeur.

Le mode de réalisation des figures 3 et 4 est ainsi tout particulièrement avantageux pour des machines de grande taille, par exemple pour des longueurs d'arbre 11 de 450 mm et plus. La version de la figure 2 peut être préférée pour des machines de plus petite taille.

L'invention s'applique à tout type de machine électrique tournante, moteur comme génératrice.

L'ensemble des pièces destinées au montage du codeur peut être mis en place dès la fabrication de la machine et cette dernière livrée à l'utilisateur avec le codeur. En variante, l'ensemble des pièces est fourni à l'utilisateur disposant d'une machine sans codeur, équipée d'un bouchon cachant le bout d'arbre, et ce bouchon peut être enlevé et les pièces installées pour le montage du codeur.

## Revendications

1. Gamme de deux machines comportant
- au moins une première machine tournante comportant un arbre (11) et un support de palier (22) arrière présentant une ouverture (24) dans laquelle est engagé un bout d'arbre (14), la machine comportant un bouchon (25) fixé sur le support de palier, pouvant être retiré pour permettre au support de palier (22) de recevoir un ensemble de fixation d'un codeur, le bouchon (25) obturant l'ouverture (24) et comportant une lèvre annulaire (27) qui s'applique sur le bord de l'ouverture (24) pour assurer une fixation étanche du bouchon (25) sur le support de palier (22),
- au moins une deuxième machine tournante de construction identique à la première machine mis à part la présence de l'ensemble de fixation d'un codeur et dans laquelle le bouchon est retiré pour permettre au support de palier (22) de recevoir l'ensemble de fixation d'un codeur, l'ensemble de fixation d'un codeur étant fixé de manière amovible sur le support de palier (22) et sur l'arbre (11) de la deuxième machine tournante, l'ensemble comportant un embout (30) fixé sur le bout d'arbre (14) et entraînant en rotation une partie tournante du codeur, et une pièce d'étanchéité (70 ;100) s'étendant au moins partiellement dans l'ouverture (24), la pièce d'étanchéité (70 ; 100) étant configurée pour être montée de manière amovible sur le support de palier et comportant une lèvre annulaire d'étanchéité (71, 103), la lèvre annulaire d'étanchéité (71) s'ajustant dans l'ouverture (24) et présentant des nervures d'étanchéité (73) sur sa surface tournée vers l'arbre ou l'ensemble comportant une pièce d'extrémité (90) coaxiale à la pièce d'étanchéité (100), la lèvre annulaire (103) s'interposant radialement entre le bord de l'ouverture (24) et la périphérie de la pièce d'extrémité (90) et présentant des nervures d'étanchéité sur sa surface en regard de la pièce d' extrémité, l'ensemble comportant un capot (60) dans lequel la partie tournante du codeur est logée, le capot (60) supportant la connectique du codeur.

2. Gamme de deux machines selon la revendication 1, la pièce d'étanchéité (70 ;100) comportant une ouverture centrale pour le passage de l'embout (30).

3. Gamme de deux machines selon la revendication 1 ou 2, l'ensemble comportant un disque de montage ajouré (50) reliant le capot (60) à la pièce d'étanchéité (70).

4. Gamme de deux machines selon l'une quelconque des revendications précédentes, le codeur (40) étant de type optique.

5. Gamme de deux machines selon la revendication 1, la machine comportant un épaulement périphérique (80) sur le bout d'arbre (14), la pièce d'extrémité (90) comportant une nervure périphérique (91) qui prend appui sur l'épaulement périphérique (80) pour assurer la coaxialité du codeur lors de sa fixation.

6. Procédé pour équiper une machine tournante sans codeur d'une gamme de deux machines selon la revendication 1 d'un codeur grâce à un ensemble de fixation d'un codeur comportant un embout (30) configuré pour se fixer sur le bout d'arbre et entraîner en rotation une partie tournante du codeur, et une pièce d'étanchéité (70 ; 100) s'étendant au moins partiellement dans l'ouverture (24), le procédé comportant l'étape consistant à enlever le bouchon (25) avant la fixation de la pièce d'étanchéité (70 ;100) et l'étape consistant à fixer la pièce d'étanchéité sur le support de palier arrière de la machine et à mettre en place le codeur.

## Patentansprüche

1. Reihe von zwei Maschinen, umfassend
- mindestens eine erste rotierende Maschine mit einer Welle (11) und einem hinteren Lagerträger (22) mit einer Öffnung (24), in die ein Wellenende (14) eingreift, wobei die Maschine einen Stopfen (25) aufweist, der am Lagerträger befestigt ist und entfernt werden kann, damit der Lagerträger (22) eine Baugruppe zur Befestigung eines Codierers aufnehmen kann, wobei der Stopfen (25) die Öffnung (24) verschließt und eine ringförmige Lippe (27) aufweist, die am Rand der Öffnung (24) anliegt, um eine dichte Befestigung des Stopfens (25) am Lagerträger (22) zu gewährleisten,
- mindestens eine zweite rotierende Maschine, deren Aufbau bis auf das Vorhandensein der Baugruppe zur Befestigung eines Codierers mit dem der ersten Maschine identisch ist und bei der der Stopfen entfernt ist, damit der Lagerträger (22) die Baugruppe zur Befestigung eines Codierers aufnehmen kann, wobei die Baugruppe zur Befestigung eines Codierers abnehmbar am Lagerträger (22) und an der Welle (11) der zweiten rotierenden Maschine bfestigt wird, wobei die Baugruppe einen Stutzen (30) aufweist, der am Wellenende (14) befestigt ist und einen drehenden Teil des Codierers in Drehung versetzt, und ein Dichtungsteil (70; 100), das sich zumindest teilweise in die Öffnung (24) erstreckt, wobei das Dichtungsteil (70; 100) dazu ausgelegt ist, abnehmbar am Lagerträger befestigt zu sein, und eine ringförmige Dichtungslippe (71, 103) aufweist, wobei die ringförmige Dichtungslippe (71) in die Öffnung (24) passt und auf ihrer der Welle zugewandten Oberfläche Dichtungsrippen (73) aufweist, oder wobei die Baugruppe ein mit dem Dichtungsteil (100) koaxiales Endstück (90) aufweist, wobei die ringförmige Lippe (103) radial zwischen dem Rand der Öffnung (24) und dem Umfang des Endstücks angeordnet ist und auf ihrer dem Endstück zugewandten Oberfläche Dichtungsrippen aufweist, wobei die Baugruppe eine Kappe (60) aufweist, in der der drehende Teil des Codierers angeordnet ist, wobei die Kappe (60) die Anschlusstechnik des Codierers trägt.

2. Reihe von zwei Maschinen nach Anspruch 1, wobei das Dichtungsteil (70; 100) eine zentrale Öffnung für den Durchgang des Stutzens (30) aufweist.

3. Reihe von zwei Maschinen nach Anspruch 1 oder 2, wobei die Baugruppe eine durchbrochene Montagescheibe (50) aufweist, die die Kappe (60) mit dem Dichtungsteil (70) verbindet.

4. Reihe von zwei Maschinen nach einem der vorangehenden Ansprüche, wbei der Codierer (40) vom optischen Typ ist.

5. Reihe von zwei Maschinen nach Anspruch 1, wobei die Maschine eine Umfangsschulter (80) am Wellenende (14) aufweist, wobei das Endstück (90) eine Umfangsrippe (91) aufweist, die auf der Umfangsschulter (80) aufliegt, um die Koaxialität des Codierers bei seiner Befestigung zu gewährleisten.

6. Verfahren zum Ausstatten einer codiererlosen rotierenden Maschine aus einer Reihe von zwei Maschinen nach Anspruch 1 mit einem Codierer durch eine Baugruppe zur Befestigung eines Codierers, die einen Stutzen (30) aufweist, der dazu ausgelegt ist, am Wellenende befestigt zu sein und einen drehenden Teil des Codierers in Drehung zu versetzen, und ein Dichtungsteil (70; 100), das sich zumindest teilweise in die Öffnung (24) erstreckt, wobei das Verfahren einen Schritt aufweist, der darin besteht, vor der Befestigung des Dichtungsteils (70; 100) den Stopfen (25) zu entfernen, und einen Schritt, der darin besteht, das Dichtungsteil am hinteren Lagerträger der Maschine zu befestigen und den Codierer anzubringen.

## Claims

1. Set of two machines comprising
- at least a first rotary machine comprising a shaft (11) and a rear bearing support (22) having an opening (24) into which a shaft end (14) is fitted, the machine comprising a cover (25) that is attached to the bearing support and can be removed in order to allow the bearing support (22) to accommodate an assembly for attaching an encoder, the cover (25) closing off the opening (24) and comprising an annular lip (27) that presses against the edge of the opening (24) in order to attach the cover (25) to the bearing support (22) in a sealed manner,
- at least a second rotary machine, which has the same construction as the first machine with the exception of the presence of the assembly for attaching an encoder and in which the cover has been removed in order to allow the bearing support (22) to accommodate the assembly for attaching an encoder, the assembly for attaching an encoder being attached in a removable manner to the bearing support (22) and to the shaft (11) of the second rotary machine, the assembly comprising an end fitting (30), which is attached to the shaft end (14) and drives a rotary portion of the encoder in rotation, and a sealing piece (70; 100) extending at least partially into the opening (24), the sealing piece (70; 100) being configured to be mounted in a removable manner on the bearing support and comprising an annular sealing lip (71, 103), the annular sealing lip (71) being fitted in the opening (24) and having sealing ribs (73) on the surface thereof facing the shaft, or the assembly comprising an end piece (90) that is coaxial with the sealing piece (100), the annular lip (103) being radially interposed between the edge of the opening (24) and the periphery of the end piece (90) and having sealing ribs on the surface thereof that faces the end piece, the assembly comprising a cap (60) in which the rotary portion of the encoder is housed, the cap (60) bearing the connection technology for the encoder.

2. Set of two machines according to Claim 1, the sealing piece (70; 100) comprising a central opening for the passage of the end fitting (30).

3. Set of two machines according to Claim 1 or 2, the assembly comprising a mounting disc (50) that has an opening and connects the cap (60) to the sealing piece (70) .

4. Set of two machines according to any one of the preceding claims, the encoder (40) being an optical encoder.

5. Set of two machines according to Claim 1, the machine comprising a peripheral shoulder (80) on the shaft end (14), the end piece (90) comprising a peripheral rib (91) that bears on the peripheral shoulder (80) in order to ensure that the encoder remains coaxial when attached.

6. Method for fitting an encoder-free rotary machine, from a set of two machines according to Claim 1, with an encoder by virtue of an assembly for attaching an encoder, which assembly comprises an end fitting (30) configured to be attached to the shaft end and to drive a rotary portion of the encoder in rotation, and a sealing piece (70; 100) extending at least partially into the opening (24), the method comprising the step of removing the cover (25) prior to attaching the sealing piece (70; 100), and the step of attaching the sealing piece to the rear bearing support of the machine and of installing the encoder.
